# EUROPEAN PATENT SPECIFICATION

(11) **EP 2 505 390 B1**
(45) Date of publication and mention of the grant of the patent: **22.04.2015**
(21) Application number: 12173915.5
(22) Date of filing: 01.07.2009
(51) Int. Cl.: B60C 19/00

(54) **Vehicle tyre**
Fahrzeugreifen
Pneu de véhicule

(30) Priority: 03.07.2008 DE 202008009008 U
(43) Date of publication of application: 03.10.2012
(62) Divisional of application: 09772489.2
(73) Proprietor: Recticel N.V., 1140 Brussels (BE)
(72) Inventor: Kamprath, Axel, 9230 Wetteren (BE); Benoit, Kristof, 8790 Waregem (BE); Hanssens, Patrick, 9031 Drongen (BE)
(74) Representative: Haverkamp, Jens

(56) References cited:
- EP-A1- 1 659 004
- EP-A1- 2 006 125
- JP-A- 2005 104 314
- JP-A- 2006 044 503

## Description

The invention relates to a vehicle tyre with a cavity enclosed by a tread strip supporting the tread and sidewalls adjacent to this on both sides, each with a bead disposed at the free end to fit around the flange of the rim of a wheel and with a foam insert connected to the inside of the tread strip, partly filling the cavity and serving a damping function.

Vehicle tyres of this type for vehicles, trailers and semi-trailers are also referred to as pneumatic vehicle tyres. These vehicle tyres are hollow chamber tyres, which are crucially dependent on the air pressure introduced into the cavity for their stability. The cavity of this sort of vehicle tyre is formed by a tread strip supporting the tread with integrally moulded sidewalls at both sides. The sidewalls each have a bead at their free ends, with which the tyre mounted on a wheel rim is adjacent to the rim well and also to a rim flange. In tubeless tyres, the bead is sealed to the rim flange or rim well. The cavity provided by the vehicle tyre is closed by the rim.

When the tread of this sort of tyre runs along the road, running noise is produced primarily by the tyre profile inserted in the tread. The resonance vibrations responsible for the driving noise are transported as airborne sound into the environment and as structure-borne sound through the wheel, the vehicle wheel suspension and the chassis into the inside of the vehicle. DE 30 42 350 A1 describes a pneumatic vehicle tyre, which has a foam insert inserted in the tyre for noise damping. This is connected to the inside of the tyre, for example by adhesion or vulcanisation. This prior art document indicates that visco-elastic foams are unsuitable for use in damping structure-borne sound in a vehicle wheel. For this reason, the foam material used in the foam insert described in DE 30 42 350 A1 for damping is a non-visco-elastic foam material, for example a cross-linked polyurethane foam. Even through it is disclosed in this state of the art that the foam used may have a density of between 35 and 300 kg/m³, a foam with a density of 100 kg/m³ is evidently preferred to achieve damping. In order to reach this sort of volume weight, inorganic fillers may be added to the foam. This sort of foam insert can achieve damping in the frequency range above 500 Hz. Although this document indicates that with an increased layer thickness the damping can also be shifted to frequency ranges slightly lower than 500 Hz, frequencies of under 400 Hz, particularly frequencies in the range 200 to 250 Hz or even lower, cannot be effectively damped using the concept described in this document.

EP 0 367 556 A2 discloses a pneumatic tyre with a porous damping layer of uniform thickness disposed over the entire inside of the pneumatic tyre. An essential element of this layer of foam is that the mean pore dimension must not exceed 10 µm, while a layer thickness of 4 to 10 mm is anticipated. The pores in this layer of foam should be no less than 20% open. An expanded rubber material is used as the material and applied to an airtight layer, preferably of the same material, on the inside of the tyre. However, the frequency spectrum achieved with this tyre displays characteristic peaks in the frequency range below 300 Hz. Such peaks in the frequency spectrum are not desirable, as they can frequently be heard as a single tone. In addition, with the damping according to EP 0 367 556 A2, it is important to pay attention when fitting the tyre onto and, conversely, dismantling it from the rim, that the foam layer is not damaged, particularly close to the beads.

EP 0 870 631 A2 discloses a vehicle wheel with a layer of foam damping tread vibrations. This may be an open-cell polyether foam or a visco-elastic polyurethane foam. Further details of the nature and quality of the foam in this document are not disclosed. The cavity of the vehicle tyre is preferably mostly filled with the foam filling. In other publications, for example EP 1 659 004 A1, achieving noise damping in tyres requires the foam insert to fill no more than 20% of the tyre cavity.

JP 2005 104 314 discloses a tire according to the preamble of claim 1.

Something that is of interest in relation to the present invention is that quite evidently different approaches have been taken to try to improve the damping of elastic vehicle tyres (pneumatic tyres), but that such tyres have not or have not yet been supplied to date. One reason for this may be that damping has not yet been optimised, particularly in the lower frequency range. Another may be that the thermal insulation caused by the prior art foam inserts are regarded as problematic. The result of thermal insulation is that the heat occurring on the tyre tread can only be radiated to the inside of the tyre to an inadequate extent, which in turn increases tyre wear. Starting from this discussed prior art it is an object of the invention to suggest an elastic vehicle tyre (pneumatic tyre) of the kind initially mentioned, so that it is optimised in respect of its wear.

This problem is solved by a vehicle tyre as initially defined with the features of claim 1.

In order to improve the removal of heat from the inside of the tread strip of the vehicle tyre and thus to reduce wear, between the foam insert and the inside of the vehicle tyre close to the tread strip or embedded in the foam insert in its edge area adjacent to the inside of the vehicle tyre close to the tread strip, at least one heat dissipation insert is disposed partially extending over the width of the tread strip, which starts from the inside of the vehicle tyre close to the tread strip to remove heat from this area and extends towards the sidewalls, in which area the heat removed from the inside of the tread strip can radiate from the heat dissipation insert into the cavity. This area may also be referred to as the radiation area. The heat dissipation insert has good thermal conductivity. Consequently, it is preferably made from metal and may be a metal grid or metal mesh, for example. The advantage of a metal grid or metal mesh being provided is that the apertures or openings contained therein can be used to press or fix the heat dissipation insert with the foam of the foam insert to the inside of the vehicle tyre, if the heat dissipation insert is located at the interface between the foam insert and the inside of the tyre. The attachment of the foam insert to the inside of the vehicle tyre preferably comes about without using an additional adhesive, simply by the adhesive forces of the foam. This attachment process of the foam insert to the inside of the vehicle tyre can be supported by free vulcanisation valences of the inside of the vehicle tyre being incorporated in the attachment process or in the cross-linking process of the foam in the foam insert. This sort of heat dissipation insert preferably has a relatively large contact surface with the inside of the tyre, particularly close to the inside of the tread strip. This can be achieved, for example, by a metal grid in which the individual links have an essentially uncurved surface on at least one side. The cross-sectional area of the links in this type of metal grid (the same applies to metal mesh) are of such dimensions that the heat needing to be dissipated can be removed from the inside of the tread strip as it occurs. The heat dissipation insert extends at least in sections along the sidewalls, at least along one sidewall and may be conducted towards the bead. It is essential for the heat dissipation insert to extend into an area in which the heat dissipated from the tread strip can radiate into the remaining cavity within the vehicle tyre. Radiation is possible if the heat dissipation insert extends, for example across and beyond the side limit of the foam insert. Effective radiation is also possible if the foam insert is only thin in the area of the anticipated heat radiation and the heat can therefore automatically radiate through the foam insert into the tyre cavity.

The aforementioned information on the vehicle tyre with the heat dissipation insert, wherein one or several heat dissipation inserts can be provided in principle, makes it clear that effective heat dissipation can be achieved in this way from the inside of the tread strip, irrespective of the foam insert design and its physical variables. Use of the heat dissipation described above is not therefore limited to pneumatic tyres with a foam insert of the type described above.

In a preferred embodiment the compression of the foam insert is used to achieve a graded pore volume across the thickness of the foam insert with the vehicle tyre rotating. This compression is influenced by, among other things, the density of the foam in the foam insert, which surprisingly therefore also has an effect on the problems outlined above. Foams with densities of more than 80 kg/m³ not only contribute dimensionally to the weight of the vehicle tyre, but also have a detrimental effect on the functions described earlier. Equally, the foam used should have a density of over 30 kg/m³. The density of the foam used is preferably between 35 kg/m³ and 60 kg/m³, particularly between 40 kg/m³ and 55 kg/m³. It can be concluded from this that for the desired damping the foam insert must evidently display a clear volume weight. In order to achieve the aforementioned properties for the foam insert, it is necessary for the compressive set of the foam used in the foam insert to be neither too low nor too high. At values both below and also above the aforementioned compressive set, the prescribed functions can be affected. To describe the compressive set of the foam or foam part, the residual deformation with 90% compression according to ISO 1856/A M1 is used. This should be less than 5% and preferably less than 2.5% and even more preferably less than 2%. These foam material-specific values are determined when the foam insert is at rest.

The foam of the non-rotating foam insert preferably has a tensile force:elongation ratio measured according to ISO 1798 M1 of between 1:1.7 and 1:1.3, particularly between 1:1.25 and 1:1.29. This variable can describe the degree of elongation when a given tensile strength is applied and therefore the stiffness of the foam. If the foam is too stiff and therefore displays a ratio of less than 1:1.7, losses must be accepted in relation to the desired damping. Conversely, if the stiffness of the foam displays a ratio greater than 1:1.3, this is too soft. Consequently, the stiffness of the foam or the foam part is also responsible for the damping performance.

A foam insert of this type is preferably designed using a visco-elastic foam, wherein the material properties of the foam insert are adapted such that the centrifugal force acting on the foam insert as a result of the rotation of the foam insert combined with the rotating vehicle tyre causes the foam insert to be compressed between the inside of the tread and the cavity. This sort of foam part is not only far simpler to produce compared with a foam part with pores graded in size, even in the unloaded state, but the visco-elasticity means that a particularly good damping performance is achieved too, particularly one that is adapted to the different damping necessary depending on speed. At higher rotational speeds, the foam part is compressed towards the inside of the tread strip to a greater extent than at lower rotational speeds. To this end, the foam insert is also connected to the inner wall of the vehicle tyre. Using the centrifugal force that occurs during rotation of the foam insert with the vehicle tyre produces the desired pore space graduation, with the pore size diminishing towards the inner wall of the vehicle tyre's tread strip.

The term "open-cell" used in the context of this information means that all pores in the foam are preferably open pores (cells), and if not all pores are open-cell pores at least the vast majority of them. This foam structure combined with the preferably visco-elastic material property of the foam insert has an influence on the effective damping of the tyre parts caused to vibrate by the rolling of the tyre. It is assumed that a transmission of the parts caused to vibrate by the vehicle tyre during rolling to the air column located within the tyre is only passed on dampened, if at all. The open porosity of the foam in the foam insert has the added advantage that the heat can be more effectively removed from the tread strip through the path of the open pores in the foam than in a closed-pore foam. The heat removal is further supported by the fact that the vibrations induced in the foam insert cause a certain amount of air to be pressed out on the inside of the foam insert, so that heat is likewise thereby transported from the tread strip into the tyre cavity.

The tyre cavity is preferably at least 20% filled by the foam insert. However, a filling level of 70% should not be exceeded. A preferable embodiment is one in which the tyre cavity is no more than 50% filled by the foam insert. It has been shown that filling the tyre cavity to more than 70% can result in other detrimental influences.

Even if good results are achieved in principle with a foam insert connected to the inside of the pneumatic tyre's tread strip, wherein the foam insert does not display sidewall expansions extending along the tyre's sidewalls, better results are achieved if the foam insert follows the contour of the inside of the vehicle tyre, at least up to a section of the sidewalls. This promotes damping of sidewall vibrations in the tyre. In this sort of embodiment, the thickness of the foam insert close to the tread strip is typically greater than in the adjacent sidewall areas, in which the foam insert typically thins out as it goes towards the bead of the sidewalls. The sidewall sections of this sort of foam insert preferably end at a sufficient distance from the bead, so that the foam insert is not damaged when the vehicle tyre is fitted to and/or dismantled from the rim of a wheel.

The invention is described below with reference to the attached figures using exemplary embodiments. In the figures
- **Fig. 1:**: shows a schematic cross-section through a vehicle tyre mounted on the rim of a wheel which is not an embodiment of the invention;
- **Fig. 2:**: shows a graph depicting the frequency spectrum resulting from the rolling of the tyre in Figure 1, compared with that of a traditional tyre;
- **Fig. 3:**: shows a graph depicting the loss factor plotted against the temperature and expressed as tan δ;
- **Fig. 4a, 4b:**: show graphs depicting the mechanical damping behaviour of a foam insert between two layers with 70% compression (Figure 4a) and with 20% compression (Figure 4b) and
- **Fig. 5:**: shows a depiction corresponding to that in Figure 1 in accordance with an embodiment of the invention.

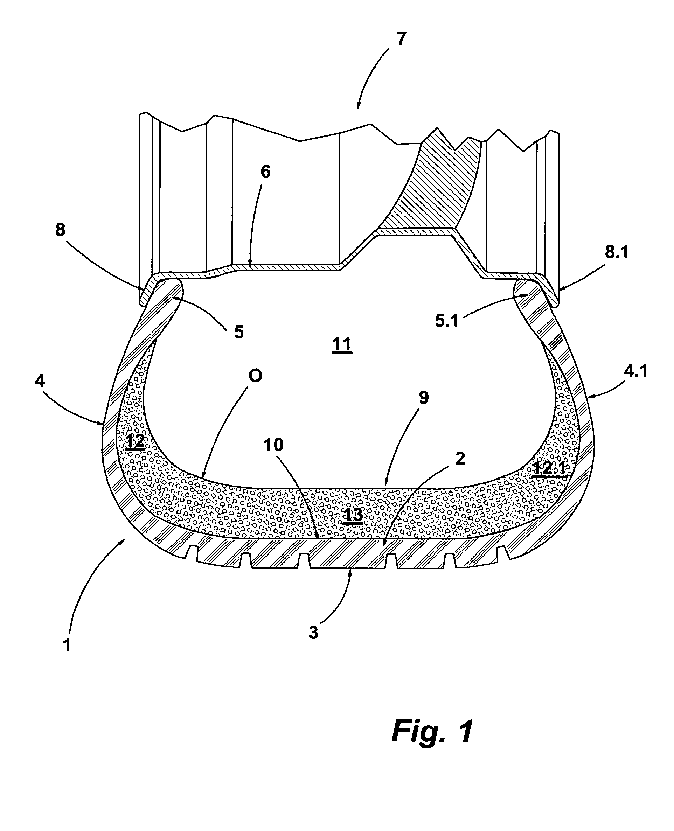

A vehicle tyre 1 made from rubber or a rubber compound has a tread strip 2, the outside of which forms the tread 3 of the vehicle tyre 1. Two side walls 4, 4.1 are moulded onto the tread strip 2. The sidewalls 4, 4.1 have a bead at each end. For the sake of simplicity, the vehicle tyre 1 is depicted without a reinforcement or carcass. Likewise, the bead core contained in the beads 5, 5.1 is not shown. The vehicle tyre 1, as illustrated in Figure 1, is mounted on the rim 6 of a wheel 7. The beads 5, 5.1 rest on the rim well and are pressed with their beads 5, 5.1 against the adjacent rim flange 8, 8.1 by the internal tyre pressure.

Disposed in the vehicle tyre 1 is a foam insert identified as a whole by reference number 9. The foam insert 9 is adhered to the inside 10 of the tread strip 2 and the insides of the sidewalls 4, 4.1. When the vehicle tyre 1 rotates, the foam insert 9 connected to the vehicle tyre 1 rotates with it. The foam insert 9 roughly 30% fills the cavity 11 of the vehicle tyre 1 created by the tread strip 2 and the sidewalls 4, 4.1. In the exemplary embodiment depicted, the foam insert 9 follows the inner contour of the vehicle tyre 1, wherein it is envisaged that the thickness of the foam insert 9 is greater close to the tread strip 2 than in the adjacent sidewall sections 12, 12.1, where the foam insert 9 thins out towards the beads 5, 5.1. The transition from the thicker base section 13 of the foam insert 9 close to the tread strip 2 to the sidewall sections 12, 12.1 and the peripheral ends of the foam insert 9 is continuous. The sidewall sections 12, 12.1 therefore run parallel at least in part or are tilted at a slight angle to the inner surface of the vehicle tyre 1.

The foam insert 9 is used to dampen the resonances of the enclosed air volume, combined with a high damping capacity in a frequency range of under 400 HZ and particularly in a frequency range of between 200 and 250 Hz. The geometry of the foam insert 9 shown with its base section 13 and the sidewall sections 12, 12.1 makes it clear that vibration damping in the elastic vehicle tyre 1 takes place not only close to the tread strip 2, but also close to the sidewalls 4, 4.1. The foam insert 9 is therefore U-shaped overall.

The synthetic mass used to create the foam insert 9 is inserted into the vehicle tyre 1 while the tyre 1 is turning before being expanded. The liquid plastic has been applied close to the transition between the beads 5, 5.1 and the adjacent sidewalls 4, 4.1, so that it spreads from the point of application due to the rotation of the vehicle tyre 1 towards the tread strip 2. Depending on the width of the vehicle tyre 1, it may be expedient for the liquid plastic to be added close to the inside of the tread strip 2 too. During the course of the subsequent cross-linking and foaming process, which is also carried out while the vehicle tyre is turning, the foam becomes connected to the inside of the vehicle tyre 1.

The foam used to create the foam insert 9 is open-cell and has visco-elastic material properties. In this case, it is envisaged that the surface O of the foam insert 9 facing the cavity 11 is characterised by the typical open-cell structure of the foam. This means that the surface O is not smooth, but displays a correspondingly structured surface through the pores truncated at this surface O. This serves sound absorption in particular.

The physical properties of the foam used to create the foam insert 9 are contained in the following table. The foam used to produce the foam insert 9 is indicated in the following table under "Example":

| | | **Quality** | | **Example** | **Tested variance** |
|---|---|---|---|---|---|
| **Test description** | **Test method** | **Result** | **Unit** | | |
| Density | ISO 845 M1 | Density | kg/m³ | **49,6** | 43,0 - 53,0 |
| CDH Hardness | ISO 3386/1 | CDH 40% after 0" | kPa | **4,1** | 2,2 - 4,2 |
| Stress-Relaxation bei 20°C | | CDH 40% after 180" | kPa | **1,9** | 1,1 - 2,0 |
| | | after 10 sec | % | **58** | 55 - 62 |
| | | after 60 sec | % | **50** | 48 - 56 |
| | | after 120 sec | % | **48** | 46 - 55 |
| Tensile strength | ISO 1798 M1 | Tensile force | kPa | **111** | 98 - 111 |
| Elongation | | Elongation | % | **142** | 135 - 164 |
| Compression set following 90 % | ISO 1856/A M1 | Compression set | % | **1,68** | 1,2 - 5 |
| Ball rebound test | ASTM D3574H M1 | Elasticity | % | **12** | 4-14 |

The stress relaxation measurements were carried out during a rapid compression of the foam being tested and the force required for the necessary compression (in this case 40%) was determined. The force required in order to bring about a 40% compression (CDH 40% after 0 sec (0")) was firstly determined. 180 seconds later, the same procedure was carried out to determine the forced needed to achieve 40% compression (CDH 40% after 180 sec (180")). The ratio between these values is a measure of the stress relaxation, while the force required to bring about a 40% compression after 0 seconds is a measure of the CDH hardness. The other stress relaxation values, which are given as a unit in percent, reflect the ratio compared with the first force measurement (CDH 40% after 0") in each case.

The visco-elasticity value, which has been determined through the set compression value of 90%, reflects the deformation rate that has occurred after the test specimen has been subject to compression of its original height to the residual height of 10%, once the compression loading has ended. Particularly good sound-damping properties are achieved using a visco-elastic foam, in which the residual deformation is less than 5% in accordance with the test method ISO 1856/A M1. The tests conducted have shown that particularly good damping results can be achieved if this value is < 2.5 and particularly < 2 %.

The visco-elastic performance of this foam is virtually constant at temperatures above 2 to 3 ºC up to temperatures of 70 to 80 ºC. The foam in the foam insert 9 of the exemplary embodiment illustrated is therefore suitable for equipping summer tyres. To equip winter tyres, which are especially driven at temperatures below 0 ºC, a foam with the same or virtually the same physical properties but with a different chemistry is used.

A person skilled in the art will be sufficiently familiar with visco-elastic foam with the properties described. He will therefore be immediately able to select a suitable foam based on the parameters described in this information and also depending on the temperature deployment range.

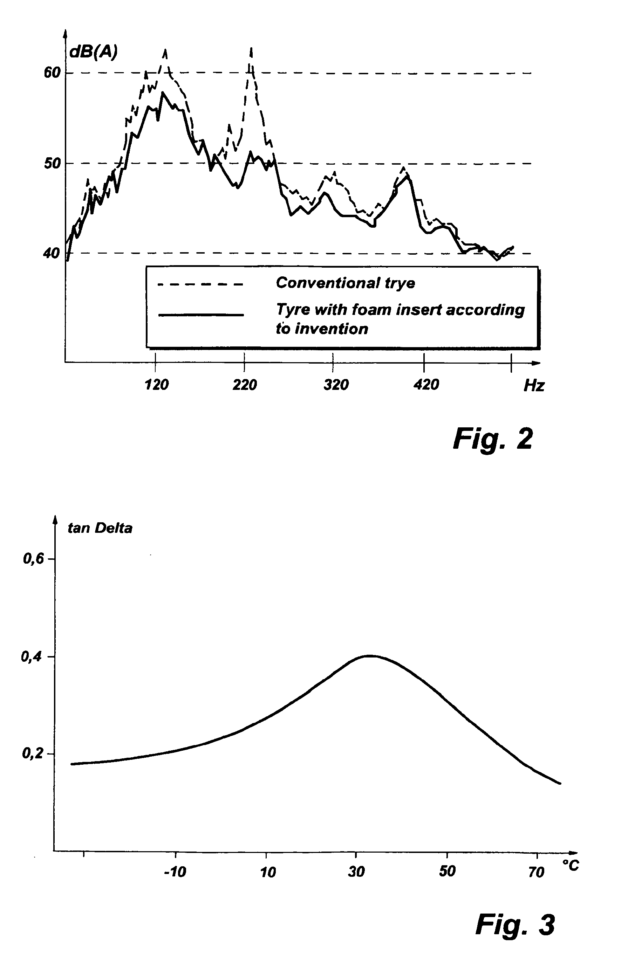

Figure 2 shows a graph depicting the sound pressure occurring in the inside of a vehicle from a vehicle tyre equipped with a foam insert with the aforementioned properties. The frequency spectrum of this vehicle tyre is compared with the frequency spectrum of a traditional tyre, as shown in Figure 3 of EP 0 367 556 A2, for example. The comparison clearly shows that the vehicle tyre fitted with the foam insert displays a clearly improved damping performance in the frequency spectrum below 500 Hz. In particular, the proportion of the frequency spectrum in traditional tyres that can otherwise be heard as a single tone at a frequency of roughly 220 Hz is so far reduced that this peak is no longer discernible and cannot be detected as a single tone inside a vehicle. Furthermore, there is also a clear improvement in the frequency range between 100 and 150 Hz.

For a visual image of the elastic behaviour of the foam used to create the foam insert 9, reference is made to the graph shown in Figure 3. In this the loss factor is depicted as tan δ (tan delta) against the temperature. The loss factor is preferably higher than 0.3, in the exemplary embodiment shown it is around 0.4 and is in any event lower than 0.8 and in the temperature range envisaged for use of the vehicle tyre 1, it is no lower than the 0.2 value or only by a negligible amount. The tan δ is defined in accordance with ISO 6721-1 and determined accordingly. The measurements were performed using a mechanical dynamic analyser made by TA Instruments and known per se.

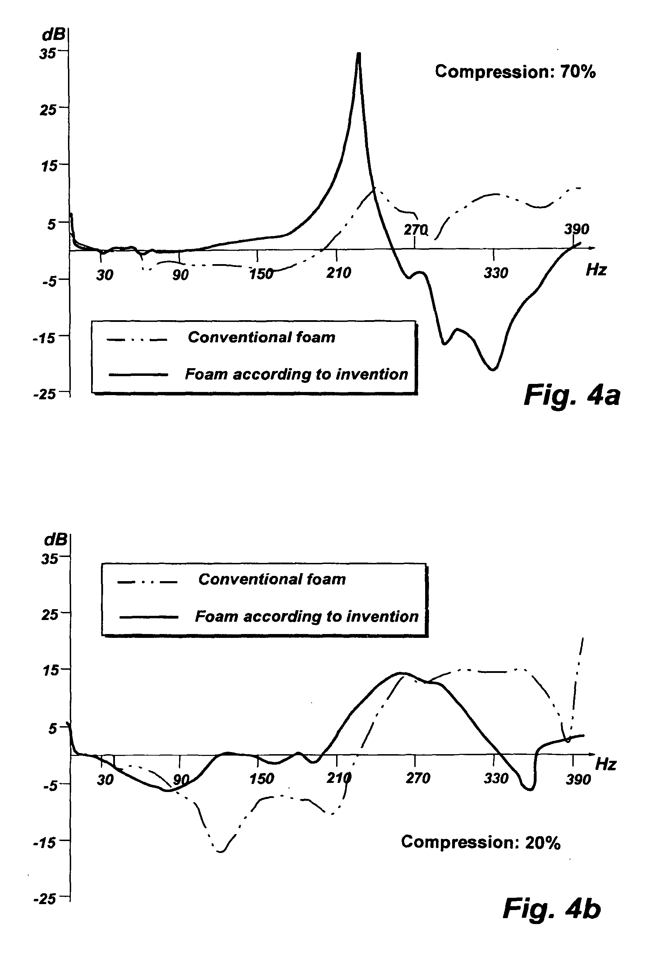

Figures 4a, 4b each show a graph from which the frequency-dependent damping behaviour of the foam used as the "Example" in the aforementioned table to create the foam insert 9 is illustrated. These graphs depict the foam characterised as the "Example" in each case and a traditional foam with non-visco-elastic properties, as described earlier. As the vehicle tyre 1 rotates, the centrifugal force acting on the foam insert 9 causes the foam insert to be compressed, or specifically graded, towards the inside 10 of the tread strip 2 and as the distance from the inner surface O grows, the compression due to the greater mass exposed to the centrifugal force in each case increases towards the inside 10 of the tread strip 2. The result of this is that the pore volume drops accordingly in line with the compression towards the inside 10 of the tread strip 2 within the foam insert 9. Figure 4a shows the damping performance of the foam used to create the foam insert 9 at 70% compression. This compression is the maximum compression for the foam in the foam insert 9 when the vehicle tyre 1 turns at high speed. Consequently, this compression is in the peripheral area of the foam insert 9 on the inside 10 of the tread strip 2. The frequency (Hz) is plotted on the x-axis of the graphs in Figures 4a, 4b. The damping performance is plotted on the y-axis, with positive values representing damping and negative values representing reinforcement of the induced vibrations.

Figure 4a shows that in the maximum compression range (here: 70%), particularly good damping is achieved in the frequency range of roughly 225 Hz which is viewed as critical. Vibrations in the tyre walls in particular are damped by this damping. This damping is also responsible for the fact that in the graph in Figure 2 the measured sound pressure in this very frequency range is significantly reduced compared with a tyre with no foam insert.

The graph in Figure 4a shows no damping in the frequency range 300 to 350 Hz. This is non-critical, since on the one hand these frequencies are not tyre-sensitive frequencies (cf. Figure 2) and, on the other, these frequencies are absorbed by the foam insert area compressed successively smaller towards the cavity 11.

Figure 4b shows the damping performance of the foam insert in the 20% compression range. With the foam, good damping is evident in the frequency range above 210 Hz and also particularly in the interesting range above 225 Hz. Conventional foam displays no damping in the 225 Hz frequency range. Clearly evident in Figure 4b is the vibration increase of the traditional foam in a foam insert plotted in Figure 4b for comparison purposes, which suggests a negative effect on the damping of the peak found in Figure 2 at 120 Hz. The U-shaped embodiment of the foam insert 9 with its sidewall sections 12, 12.1 has a positive effect on the damping of wall vibrations in the vehicle tyre 1. In the rotating vehicle tyre 1 and the foam insert 9 rotating with the vehicle tyre 1, shear stress builds within the sidewall sections 12, 12.1, since the foam insert is connected to the inner wall of the vehicle tyre 1.

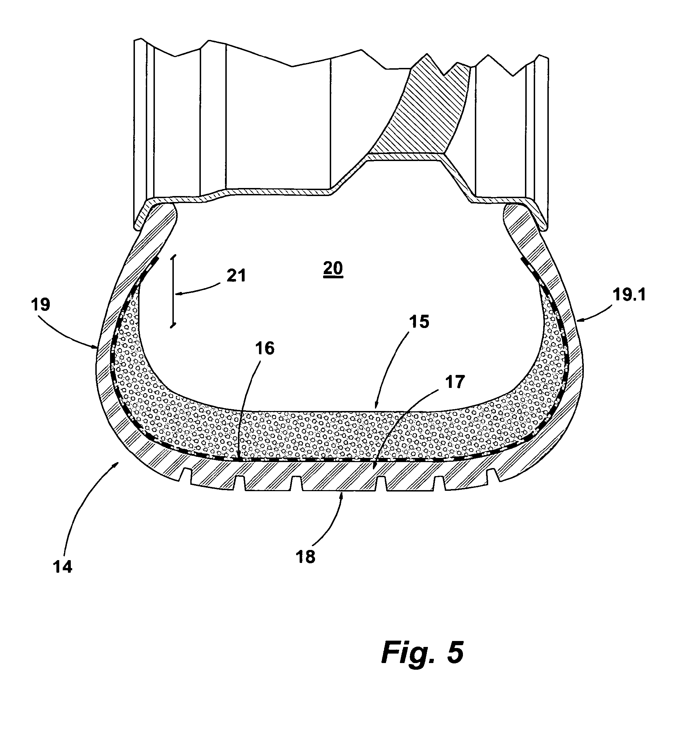

Figure 5 shows another vehicle tyre 14, which is built in the same way in principle as the vehicle tyre in Figure 1. In addition to the foam insert 15, this vehicle 14 is also equipped with a heat dissipation insert 16. The purpose of the heat dissipation insert 16 is to remove heat generated by the rolling of the vehicle tyre 1 close to the tread strip 17 from the latter, in order to reduce wear on the tread 18. The heat dissipation insert 16 in the exemplary embodiment depicted is designed as a metal grid, made from brass or aluminium for example. The individual links of the metal grid are rectangular in cross-section. The surfaces facing the inside of the vehicle tyre 14 are largely adjacent to the inside of the vehicle tyre 14 with their entire surface. The heat dissipation insert 16 extends from the inside of the tread strip 17 along the sidewalls 19, 19.1 into an area in which the heat removed from the tread strip 17 can radiate into the cavity 20 of the vehicle tyre 14. In the case of the exemplary embodiment shown in Figure 4, in which the foam insert 15 thins out towards the beads in the area of its sidewall sections and the heat dissipation insert 16 is extended across the end of the foam insert 15, the radiation area is formed by the section of the heat dissipation insert 16 that projects out of the foam insert 15. Likewise, the end area of the sidewall sections of the foam insert 15, in which these are relatively thin, creates an area in which heat is radiated from the heat dissipation insert 16 into the cavity 20. The radiation area is identified in Figure 4 in relation to the sidewall 19 using reference number 21. With this sort of heat dissipation insert 16, in addition to the properties of the open-cell foam in the foam insert 15, heat is effectively removed from the tread strip 17, which means that the tread 18 is heated less quickly and is therefore subject to a smaller amount of wear compared with tyres fitted with a traditional foam insert.

The heat dissipation insert 16 is attached to the inside of the vehicle tyre 14 in the exemplary embodiment illustrated by the foam of the foam insert 15, which goes through the holes in the metal grid. If the method described in relation to vehicle tyre 1 is used to incorporate the foam insert 15 into the vehicle tyre 14, the heat dissipation insert 16 is inserted before the liquid plastic is added to the tyre 14. This is preferably under a certain pre-stress against the inside of the vehicle tyre 14, which serves to fix the heat dissipation insert 16 until the foam insert 15 has hardened and is connected to the inside of the vehicle tyre 14.

Instead of the heat dissipation insert described, which is described as a metal grid, this may also be in the form of a film, for example a metallised film. The essential thing is that the heat dissipation insert channels heat away from the tread strip area of the vehicle tyre towards the sidewalls and the heat is diverted into the cavity remaining in the vehicle tyre and/or into the rim. The latter applies when the heat dissipation insert is conducted up to the area of a bead of the pneumatic tyre, namely until the heat dissipation insert lies against the wheel rim when a tyre is fitted to a wheel rim and is therefore trapped between the bead and the rim.

Effective heat dissipation is also possible if the heat dissipation insert is disposed in the peripheral area of the foam insert and therefore only a short distance from the inside of the vehicle tyre.

A heat dissipation insert, as described earlier from the point of view of its functional principle, may for example also be created by an airtight elastic film with correspondingly good heat conductivity, which is disposed between the foam insert and the inner wall of the vehicle tyre. In a further development of this sort of heat dissipation insert, it is envisaged that the film should be equipped with such elasticity and/or the forces bonding this film to the inner wall of the vehicle tyre should be such that a foreign body penetrating the tyre from outside, such as a nail, for example, causes the film to be lifted from the inner wall of the vehicle tyre, but this object does not pierce the film. Consequently, with this sort of vehicle tyre the risk of air being lost due to objects penetrating from outside is reduced. It is likewise possible in principle for this sort of film or insert to be used without performing a compelling heat dissipation function.

In addition to the described heat dissipation insert, the foam insert may preferably contain phase-transition material in microcapsule form - socalled latent heat storage material. By fitting this sort of phase-transition material into the foam insert, a further temperature rise is delayed, depending on the phase-transition material selected, namely, depending on the phase-transition material chosen and the temperature at which the aggregate state of the phase-transition material changes, particularly from solid to liquid, so that heat is thereby consumed; this delay lasts until the aggregate state of the phase-transition material has altered. This establishes the material's latent heat storage capability. The inclusion of this sort of phase-transition material in the foam insert of a vehicle tyre serves to buffer temperature peaks during driving in relation to tyre warming. A material that is adapted to the maximum tyre running pressure to be tolerated in each case or else one with a phase-transition temperature that lies at this temperature is therefore used as the phase-transition material. The phase-transition material is advantageously located in the peripheral area of the foam insert adjacent to the inside of the tread strip. Wax or paraffin is preferably used as the phase-transition material in relation to the application described above in foam inserts for vehicle tyres; these are above all suitable in relation to heat storage in the temperature field under consideration. In order to achieve a buffer effect across a wider temperature range, phase-transition materials can also easily be used in the foam, said materials having a phase-transition temperature that differs in each case.

Apart from the properties of the vehicle tyre described above, a foam insert, at least as shown in Figures 1 and 4, in any case, is likewise advantageous with regard to the emergency properties of the vehicle tyre. The foam insert grants a certain support in the case of air loss, so that a vehicle tyre equipped in this way can still be driven over a certain distance at slow speed.

### Reference List

- 1: Vehicle tyre
- 2: Tread strip
- 3: Tread
- 4, 4.1: Sidewall
- 5, 5.1: Bead
- 6: Rim
- 7: Wheel
- 8,8.1: Rim flange
- 9: Foam insert
- 10: Inside
- 11: Cavity
- 12, 12.1: Sidewall section
- 13: Base section
- 14: Vehicle tyre
- 15: Foam insert
- 16: Heat dissipation insert
- 17: Tread strip
- 18: Tread
- 19, 19.1: Sidewall
- 20: Cavity
- 21: Radiation area
- O: Surface

## Claims

1. An elastic vehicle tyre with a cavity (20) enclosed by a tread strip (17) supporting the tread (18) and sidewalls (19, 19.1) adjacent to this on both sides, each with a bead disposed at the free end to fit around a flange of the rim of a wheel and with a foam insert (15) connected to the inside of the tread strip (17), partly filling the cavity (20) and serving a damping function, **characterised in that** at the interface between the foam insert (15) and the inside of the vehicle tyre close to the tread strip or embedded in the foam insert (15) in its edge area adjacent to the inside of the vehicle tyre close to the tread strip (17), at least one heat dissipation insert (16) is disposed at least partially extending over the width of the tread strip (17), which starts from the inside of the vehicle tyre close to the tread strip (17) to remove heat from this area and extends towards the sidewalls (19, 19.1) beyond at least one edge of the foam insert (15), in which area the heat removed from the inside of the tread strip (17) can radiate from the heat dissipation insert (16) into the cavity (20), wherein a metal grid or metal mesh or a heat-conducting, elastic, airtight film is provided as the heat dissipation insert.

2. The vehicle tyre according to one of the claim 1, **characterised in that** the heat dissipation insert (16) is in contact with the inside of the vehicle tyre (14) close to the tread strip (17) and the heat dissipation insert (16) is secured to the inside of the vehicle tyre by means of the foam insert (15).

3. The vehicle tyre according to claim 1 or 2, **characterised in that** the heat dissipation insert extends into the area of the vehicle tyre bead, preferably until it lies adjacent to the wheel rim when a tyre is fitted to it.

## Patentansprüche

1. Elastischer Fahrzeugreifen mit einem Hohlraum (20), der eingeschlossen ist von einem Laufflächenstreifen (17), welcher die Lauffläche (18) stützt, und hieran beidseitig angrenzenden Seitenwänden (19, 19.1), jede mit einem an einem freien Ende angeordneten Wulst, um um einen Flansch des Randes eines Rades herum zu passen, und mit einer Schaumstoff-Einlage (15), die mit der Innenseite des Laufflächenstreifens (17) verbunden ist, den Hohlraum (20) teilweise füllt und einer Dämpfungsfunktion dient, **dadurch gekennzeichnet, dass** an der Grenze zwischen der Schaumstoff-Einlage (15) und der Innenseite des Fahrzeugreifens nahe dem Laufflächenstreifen oder eingebettet in die Schaumstoff-Einlage (15) in deren Randbereich, angrenzend an die Innenseite des Fahrzeugreifens nahe dem Laufflächenstreifen (17), wenigstens eine Wärmeableitungs-Einlage (16) angeordnet ist, die sich wenigstens teilweise über die Breite des Laufflächenstreifens (17) erstreckt und die an der Innenseite des Fahrzeugreifens nahe dem Laufflächenstreifen (17) beginnt, um Wärme aus diesem Bereich abzuleiten, und sich zu den Seitenwänden (19, 19.1) hin über wenigstens einen Rand der Schaumstoff-Einlage (15) hinaus erstreckt, in welchem Bereich die Wärme, die von der Innenseite des Laufflächenstreifen (17) entfernt wurde, von der Wärmeableitung-Einlage (16) in den Hohlraum (20) abstrahlen kann, wobei ein Metallgitter oder Metallgewebe oder ein wärmeleitender, elastischer, luftdichter Film als Wärmeableitungs-Einlage eingesetzt ist.

2. Fahrzeugreifen nach Anspruch 1, **dadurch gekennzeichnet, dass** die Wärmeableitungs-Einlage (16) mit dem Inneren des Fahrzeugreifens (14) nahe dem Laufflächenstreifen (17) in Kontakt steht die Wärmeableitungs-Einlage (16) mittels der Schaumstoff-Einlage (15) an der Innenseite des Fahrzeugreifens befestigt ist.

3. Fahrzeugreifen nach Anspruch 1 oder 2, **dadurch gekennzeichnet, dass** die Wärmeableitungs-Einlage sich in den Bereich des Fahrzeugreifen-Wulstes erstreckt, bevorzugterweise bis sie angrenzend an den Rand eines Rades liegt, wenn ein Reifen auf dieses aufgezogen ist.

## Revendications

1. Pneu élastique de véhicule comportant une cavité (20) entourée par une bandage (17) supportant la bande de roulement (18) et des flancs (19, 19.1) adjacents sur les deux côtés, chacun comportant une tringle disposée à l'extrémité libre pour s'ajuster autour d'un rebord de la jante d'une roue et avec un insert en mousse (15) relié à la partie interne du bandage (17), remplissant partiellement la cavité (20) et faisant fonction d'amortisseur, **caractérisé en ce que** à l'interface entre l'insert en mousse (15) et la partie interne du pneu de véhicule située à proximité du bandage ou intégré dans l'insert en mousse (15) dans sa partie latérale adjacente à la partie interne du pneu de véhicule située à proximité du bandage(17), est disposée au moins une pièce (16) de dissipation de chaleur s'étendant au moins partiellement au-delà de la largeur du bandage (17), qui commence à partir de la partie interne du pneu de véhicule située à proximité du bandage (17) pour évacuer la chaleur de cette zone et s'étend en direction des flancs (19, 19.1) au-delà d'au moins un bord de l'insert en mousse (15), la chaleur évacuée de l'intérieur du bandage (17) dans la dite zone pouvant irradier à partir de la pièce de dissipation (16) vers la cavité (20), une plaque de métal ou un treillis métallique ou un film conducteur de chaleur, élastique et étanche à l'air étant prévu en tant que pièce de dissipation de chaleur.

2. Le pneu de véhicule selon la revendication 1, **caractérisé en ce que** la pièce de dissipation de chaleur (16) est en contact avec l'intérieur du pneu de véhicule (14) proche du bandage (17) et la pièce de dissipation de chaleur (16) est fixée à l'intérieur du pneu du véhicule au moyen de l'insert en mousse (15).

3. Le pneu de véhicule selon la revendication 1 ou la revendication 2, **caractérisé en ce que** la pièce de dissipation de chaleur s'étend à l'intérieur de la zone de la tringle du pneu du véhicule, de préférence jusqu'à ce qu'elle se positionne de manière adjacente à la jante de la roue lorsqu'un pneu est ajusté sur celle-ci.
